# DEMANDE DE BREVET EUROPEEN

(11) **EP 0 703 168 A1**
(43) Date de publication de la demande: **27.03.1996**
(21) Numéro de dépôt: 95402083.0
(22) Date de dépôt: 15.09.1995
(51) Int. Cl.: B65G 49/08, F27D 3/00

(54) **Procédé et dispositif de manutention pour le chargement de produits à cuire et le déchargement de produits cuits**

(30) Priorité: 20.09.1994 FR 9411162
(71) Demandeur: CERIC Société Anonyme, F-75008 Paris (FR)
(72) Inventeur: Antoniol, Zéno, F-21340 Nolay (FR)
(74) Mandataire: Loyer, Bertrand

(57) **Abrégé**

Dans un procédé de manutention pour le chargement de produits à cuire et le déchargement de produits cuits, on dépile les rangées 11 de supports réfractaires 12 contenant des produits cuits à l'aide d'un moyen de dépilage 14; on place des sous-groupes de supports réfractaires 12 avec leurs produits cuits sur un moyen 15 de transfert intermédiaire; on décharge uniquement les produits cuits en laissant les supports réfractaires 12 en place sur ledit moyen 15 de transfert intermédiaire; on recharge les supports réfractaires 12 placés sur ledit moyen 15 de transfert intermédiaire en produits à cuire; on empile les supports réfractaires 12 contenant les produits à cuire sur un wagon dépilé à une étape précédente, à l'aide d'un moyen d'empilage 18.

Un dispositif de manutention mettant en oeuvre le procédé ci-dessus est avantageusement commandé par un programme.

Application à la fabrication et à la cuisson de tuiles, briques, carreaux et autres produits en matériau céramique.

## Description

L'invention est relative à un procédé de manutention pour le chargement de produits céramiques à cuire et le déchargement de produits cuits, ainsi qu'à un dispositif de manutention correspondant.

Le document FR 2.120.335 décrit un perfectionnement aux fours continus de tuiles, briques ou céramiques dans lequel des wagons transportent des tuiles disposées en piles, de manière à introduire lesdites piles placées sur des wagons dans le four de cuisson. Généralement, les wagons transportant les tuiles circulent sur une voie ferrée formant une boucle continue, ladite boucle comportant une partie de voie ferrée en ligne droite traversant le four de cuisson et une autre partie de voie ferrée en ligne droite parallèle, sur laquelle s'effectue le déchargement de produits cuits et le chargement de produits à cuire.

Le document FR 2.340.882 décrit un système d'empilage et dépilage par moyens mécaniques en plusieurs couches superposées sur wagons d'éléments céramiques juxtaposés dans des cages rigides ouvertes latéralement et par dessus et dont les côtés verticaux sont autoportants. Pour l'empilage, le wagonnet se déplaçant sur une piste arrive chargé de cases rigides vides empilées en plusieurs couches superposées; lesdites cases vides sont transportées sur un poste de remplissage où elles reçoivent des paquets d'éléments céramiques juxtaposés grâce à un dispositif annexe de préempilage. Les cases rigides ainsi garnies sont ramenées au-dessus de la piste parcourue par le wagon et sont empilées sur celui-ci les unes au-dessus des autres en couches superposées.

Ce système d'empilage et dépilage d'éléments céramiques donne généralement satisfaction, mais présente l'inconvénient de nécessiter une installation coûteuse présentant un encombrement important.

Cet inconvénient est renforcé dans le cas où les cases, gazettes ou casiers, c'est-à-dire les supports réfractaires de produits à cuire aptes à passer dans le four lors de la cuisson, ne sont plus des gazettes en U, mais des gazettes en H, c'est-à-dire des supports réfractaires individuels destinés à recevoir des produits à cuire de grandes tailles, par exemple des tuiles de grand format.

L'invention a pour but de remédier aux inconvénients précités, en proposant un procédé simplifié de manutention pour le chargement de produits à cuire et le déchargement de produits cuits, et en mettant en oeuvre un dispositif économique à l'installation, flexible à l'utilisation et commandable à distance par des moyens programmables, du genre ordinateur ou automate programmable.

L'invention a pour objet un procédé de manutention pour le chargement de produits à cuire et le déchargement de produits cuits dans lequel on place les produits à cuire dans des supports réfractaires et on empile les supports réfractaires en rangées ou piles sur des wagons destinés à traverser un four de cuisson et dans lequel, après cuisson, on dépile les rangées ou piles pour évacuer les produits cuits, comportant les étapes suivantes :
a) dépiler les rangées de supports réfractaires contenant des produits cuits à l'aide d'un moyen de dépilage saisissant les supports réfractaires par sous-groupe d'une même ligne ou étage;
b) placer les sous-groupes de supports réfractaires avec leurs produits cuits sur un moyen de transfert intermédiaire;
c) décharger uniquement les produits cuits à l'aide de premiers moyens de préhension en laissant les supports réfractaires en place sur ledit moyen de transfert intermédiaire;
d) recharger les supports réfractaires vidés et placés sur ledit moyen de transfert intermédiaire en produits à cuire à l'aide de deuxièmes moyens de préhension ;
e) empiler les supports réfractaires contenant les produits à cuire sur un wagon dépilé à une étape a) précédente, à l'aide d'un moyen d'empilage saisissant les supports par sous-groupe d'une même ligne ou étage.

Selon d'autres caractéristiques de l'invention :
- les moyens d'empilage et de dépilage travaillent à des cadences sensiblement identiques;
- le transfert intermédiaire d'un sous-groupe de supports réfractaires, s'effectue sensiblement selon une rotation autour d'un axe sensiblement vertical;
- le transfert intermédiaire d'un sous-groupe de supports réfractaires s'effectue sensiblement selon une translation rectiligne;
- les moyens de dépilage et d'empilage sont commandés par un programme exécuté par un automate programmable, un ordinateur ou un moyen équivalent d'exécution de programmes;
- le transfert intermédiaire s'effectue par déplacements entre des postes prédéterminés de dépilage, de déchargement de produits cuits, de chargement en produits à cuire et d'empilage.

L'invention a également pour objet un dispositif de manutention pour le chargement de produits à cuire et le déchargement de produits cuits, comportant en combinaison : un moyen d'empilage, un moyen de transfert intermédiaire, un moyen de dépilage, un premier moyen de préhension pour le déchargement de produits cuits et un deuxième moyen de préhension pour le chargement de produits à cuire.

Selon d'autres caractéristiques de l'invention :
- les moyens de dépilage et d'empilage sont constitués par un appareil unique, de préférence un robot à commande programmable;
- le moyen de transfert intermédiaire comporte un carrousel entraîné en rotation autour d'un axe;
- l'axe d'entraînement en rotation du carrousel est sensiblement vertical;
- le moyen de transfert intermédiaire comporte un transporteur;
- le moyen d'empilage est constitué par un robot programmable à plusieurs axes et le moyen de dépilage est également constitué par un robot programmable à plusieurs axes;
- au moins un dit moyen de préhension est constitué par un robot programmable de faible charge utile.

L'invention sera mieux comprise grâce à la description qui va suivre donnée à titre d'exemple non limitatif en référence aux dessins annexés dans lesquels :

La figure 1 représente schématiquement une vue en plan d'une installation de l'art antérieur comprenant un circuit de manutention de produits entre la sortie et l'entrée d'un four de cuisson .

La figure 2 représente schématiquement une vue en élévation latérale d'un premier mode de réalisation de l'invention.

La figure 3 représente schématiquement une vue en plan d'un mode de réalisation de l'invention analogue au mode de réalisation de la figure 2.

La figure 4 représente schématiquement une vue en plan d'un autre mode de réalisation de l'invention.

La figure 5 représente schématiquement une vue en élévation latérale d'un deuxième mode de réalisation de l'invention.

La figure 6 représente schématiquement une vue en plan d'un mode de réalisation de l'invention analogue à celui de la figure 5.

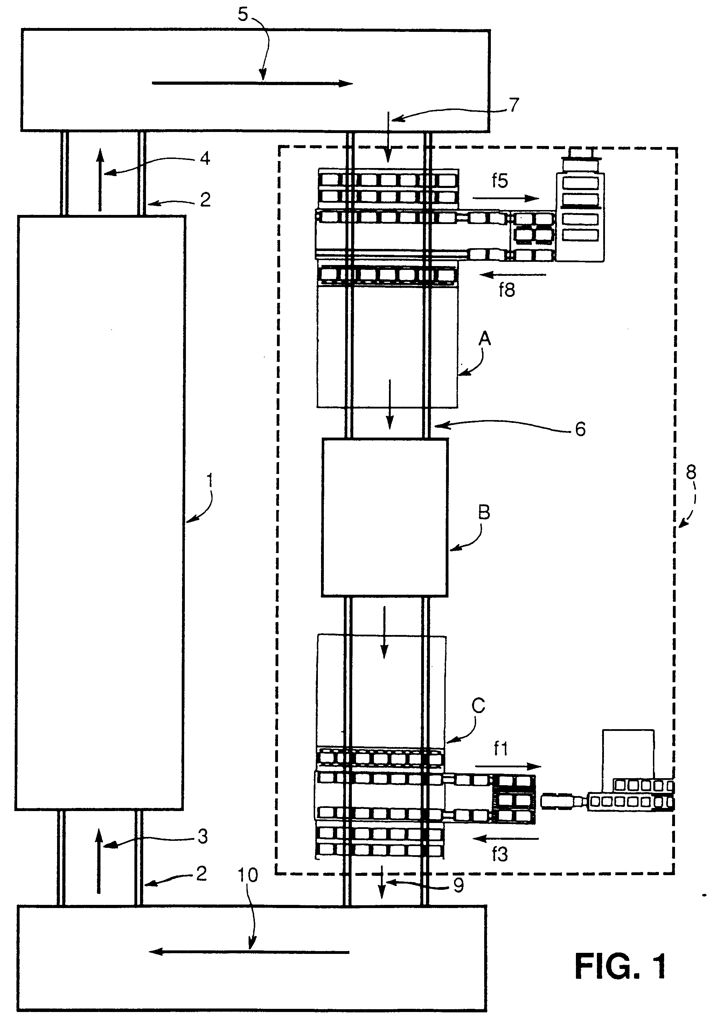

En référence à la figure 1, une installation pour la cuisson de produits à cuire tels que des tuiles, des carreaux de revêtements, ou autres produits en matériau céramique destinés à être cuits, comporte un four tunnel 1 traversé par une voie ferrée 2.

De manière connue en soi, des wagons chargés de produits à cuire circulent dans le sens de la flèche 3 pour entrer dans le four tunnel 1 selon un cycle prédéterminé en fonction de la cuisson du produit, circulent à travers le four tunnel 1 selon un cycle prédéterminé et ressortent dans le sens de la flèche 4 du four tunnel 1 en étant chargés de produits cuits.

A l'extrémité de la voie ferrée 2 en sortie du four tunnel 1, un système transbordeur latéral déplace les wagonnets dans le sens de la flèche 5 pour les replacer sur une deuxième voie ferrée 6 afin de permettre aux wagons chargés de produits cuits de circuler sur la voie ferrée 6 dans le sens de la flèche 7.

Un système d'empilage et dépilage décrit dans le document FR. 2.340.882 est prévu de manière à décharger les produits cuits et à charger des produits à cuire sur les wagons circulant sur la voie ferrée 6. L'emplacement du système d'empilage et dépilage analogue au système du document FR. 2.340.882 est schématisé par un cadre 8 en traits interrompus.

Dans ce système connu, les produits sont juxtaposés en position verticale dans des supports réfractaires ouverts latéralement et par dessus, dont les côtés verticaux sont autoportants, de manière à être disposés en couches superposées. Ces supports réfractaires sont constitués d'une table de support et de deux côtés verticaux opposés et sont fabriqués dans une matière réfractaire, de manière à constituer une structure rigide. Ces supports réfractaires de type connu présentent par exemple une conformation en U élargi pour recevoir plusieurs produits cuits ou à cuire ou présentent une conformation en H dans le cas de supports réfractaires unitaires recevant des produits de grandes dimensions en position horizontale.

Cette structure des supports réfractaires permet de les disposer sur les wagons en rangées verticales comprenant plusieurs lignes de supports réfractaires empilées les unes sur les autres.

Dans chaque ligne de support réfractaire, les côtés verticaux des supports réfractaires sont adjacents et dans chaque rangée, les côtés verticaux des supports réfractaires de chaque ligne ou étage reposent sur les côtés correspondants des supports réfractaires de l'étage ou de la ligne inférieure.

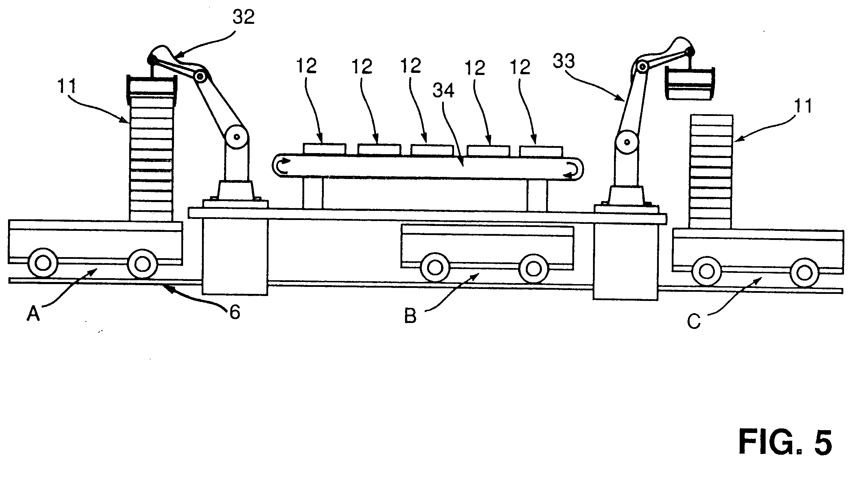

Un wagon A chargé de produits cuits est introduit dans la zone 8 de manutention en circulant sur la voie ferrée 6 est déchargé dans le sens de la flèche f5 de ses supports réfractaires contenant des produits cuits, puis rechargé dans le sens de la flèche f8 en supports réfractaires vidés, selon le principe décrit en référence à la figure 5 du document FR. 2.340.882.

Un wagon B circulant sur la voie ferrée 6 et rempli de supports réfractaires vides circule jusqu'à une position correspondant à un wagon C.

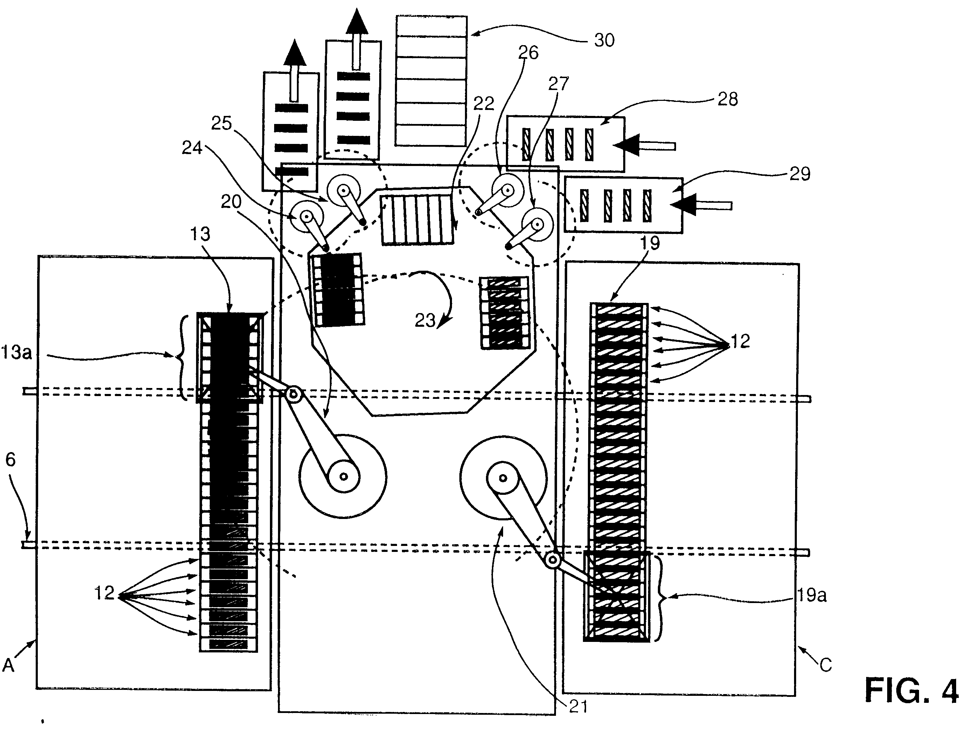

Le wagon C est déchargé dans le sens de la flèche f1 de ses supports réfractaires vides, puis rechargé dans le sens de la flèche f3 en supports réfractaires contenant des produits à cuire, selon le principe décrit en référence à la figure 4 du document FR 2.340.882.

Le wagon C portant des rangées de supports réfractaires contenant des produits à cuire sort de la zone de manutention 8 dans le sens de la flèche 9 en circulant sur la voie ferrée 6 jusqu'à un transbordeur latéral qui transporte le wagon rempli de produits à cuire dans le sens de la flèche 10, de manière à renvoyer le wagon sur la voie 2 et à permettre son introduction dans le four de cuisson 1 dans le sens de la flèche 3.

Ce système de l'art antérieur qui donne satisfaction est coûteux à fabriquer, et peu flexible au point de vue de l'installation et du fonctionnement.

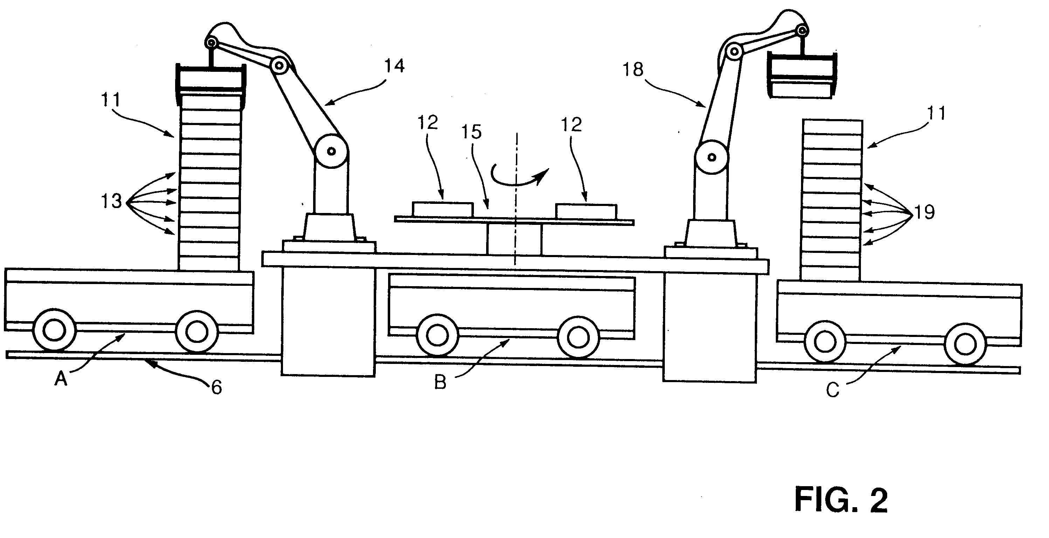

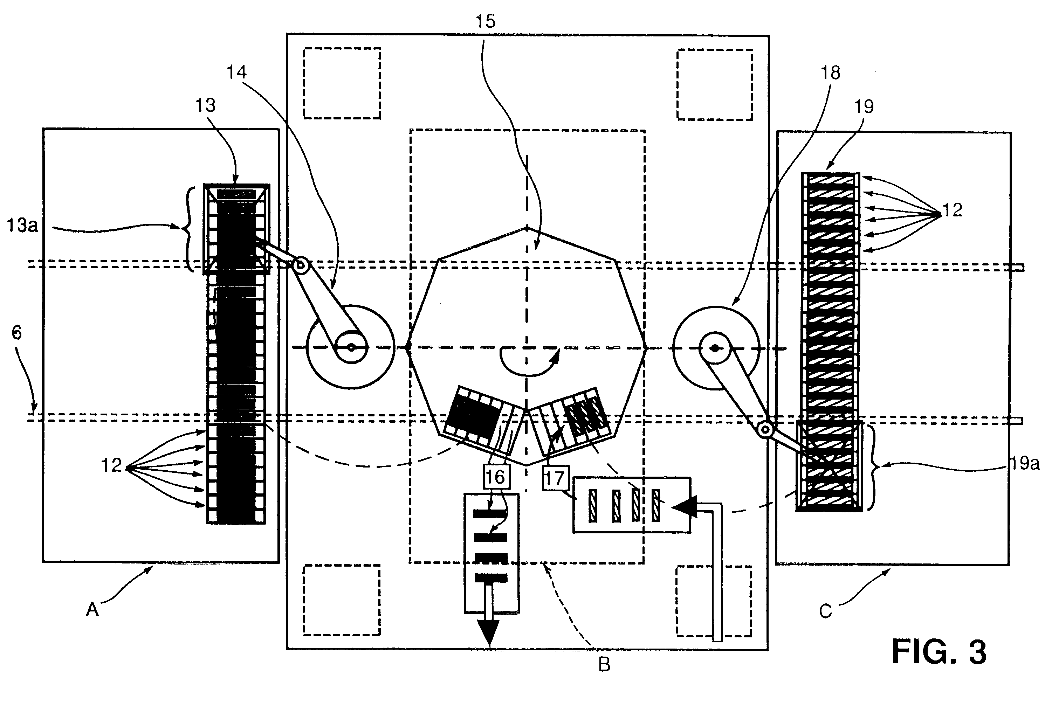

En référence aux figures 2 et 3, un wagon A placé sur une voie ferrée 6 est situé en position de déchargement de supports réfractaires contenant des produits cuits. Une rangée 11 de supports réfractaires 12 est constituée sous la forme d'un mur comportant plusieurs étages ou lignes 13 empilées successivement l'une sur l'autre.

Selon l'invention, un moyen de déchargement 14 tel qu'un robot programmable à plusieurs axes saisit une partie d'une ligne 13, par exemple, un sous-groupe 13a constitué de six supports réfractaires 12, de manière à décharger le sous-groupe 13a sur un moyen de transfert intermédiaire 15 recevant les supports réfractaires 12 remplis de produits cuits.

Le moyen de transfert intermédiaire 15 transfère les sous-groupes 13a constitués de plusieurs supports réfractaires 12 remplis de produits cuits à un poste de déchargement de produits cuits, poste comprenant des premiers moyens de préhension 16 qui déchargent uniquement les produits cuits en laissant en place les supports réfractaires 12 vides sur le moyen de transfert intermédiaire.

Au cours du transfert, le moyen 15 de transfert intermédiaire transporte les supports réfractaires vidés à l'étape précédente par les premiers moyens 16 de préhension à un poste de chargement en produits à cuire, poste comprenant des deuxièmes moyens de préhension 17 chargeant les supports réfractaires vides en produits à cuire.

Les premiers moyens de préhension 16 et les deuxièmes moyens de préhension 17 sont par exemple des pinces de manutention de type connu ou tous autres moyens équivalents couramment utilisés par l'homme du métier. On peut également utiliser des robots programmables à plusieurs axes de faible charge utile.

A l'étape suivante, le moyen 15 de transfert intermédiaire transfère les supports réfractaires 12 remplis de produits à cuire à un poste de chargement sur un wagon, poste comprenant un moyen de chargement 18, par exemple un robot programmable à plusieurs axes. Le moyen de chargement 18 sur un wagon saisit les supports intermédiaires 12 remplis de produits à cuire, de préférence par sous-groupe 19a. Un sous-groupe 19a d'une ligne 19 comprend un nombre de supports réfractaires 12 égal au nombre de supports réfractaires 12 du sous-groupe 13a précédemment décrit. Dans cet exemple, le sous-groupe 19a comprend six supports réfractaires 12 chargés de produits à cuire, et le sous-groupe 13a comprend six supports réfractaires 12 chargés de produits cuits.

Ainsi, selon une variante préférée de l'invention, la cadence du poste de chargement 18 sur wagon peut-être choisie sensiblement égale à la cadence du poste de déchargement 14 : l'empilage des rangées de supports réfractaires et le dépilage des rangées de supports réfractaires s'effectuent dans ce cas à même vitesse, sans nécessiter de stockage intermédiaire de supports réfractaires 12.

Dans cet exemple avantageux, le wagon B vide passe sous la table supportant le moyen de transfert intermédiaire 15 constitué par un carrousel tournant : le carrousel tournant 15 peut ainsi chevaucher la voie ferrée 6, ce qui diminue notablement l'encombrement général d'un dispositif selon l'invention en comparaison du dispositif décrit dans le document FR 2.340.882.

Dans une variante de l'invention non représentée, le moyen de déchargement 14 et le moyen de chargement 18 du wagon peuvent être constitués par un robot unique, de portée toutefois notablement supérieure à la portée des robots 14 et 18 représentés en référence aux figures 2 et 3.

En référence à la figure 4, une variante de réalisation de l'invention représentée à la figure 2 comporte deux robots 20 et 21 programmables à plusieurs axes de forte charge utile disposés en situation de chevauchement de la voie ferrée 6. Le robot 20 effectue le dépilage des rangées 11 de supports réfractaires 12 en saisissant des sous groupes 13a comprenant plusieurs supports réfractaires 12 d'une même ligne ou étage 13, tandis que le robot 21 effectue l'empilage en saisissant des sous groupes 19a de supports réfractaires 12 contenant des produits à cuire, de marnière à constituer progressivement des rangées de supports réfractaires contenant des produits à a cuire en procédant par lignes d'empilages successives.

Le robot de dépilage 20 transfère les sous groupes de supports réfractaires contenant des produits cuits sur un carrousel 22 tournant dans le sens de la flèche 23, de manière que des robots de préhension annexes 24 et 25 de faible charge utile effectuent l'évacuation des produits cuits pour palettisation. Les supports réfractaires vides sont alors transférés par le carrousel 22 jusqu'à une position, dans laquelle deux petits robots 26 et 27 de faible charge utile effectuent le rechargement des supports réfractaires 12 en produits à cuire amenés dans l'exemple décrit par deux lignes de convoyage 28 et 29.

Après le chargement des supports réfractaires 12 en produits à cuire, le robot d'empilage 21 réalise les piles de supports réfractaires 12 remplis de produits à cuire sur le wagon C destiné à être introduit dans le four de cuisson 1.

Le dispositif selon l'invention est ainsi entièrement flexible au point de vue fonctionnement, mais les cadences de dépilage, de déchargement de produits cuits, de chargement en produits à cuire et d'empilage peuvent être définies à volonté en fonction de l'état et des caractéristiques des produits cuits et des produits à cuire, de manière à éviter tout endommagement de ces produits.

Un avantage supplémentaire de cette disposition de l'invention est de permettre l'accès à un stockage intermédiaire 30 aux moyens d'autres robots ou d'autres actionneurs programmables, dans le but notamment d'assurer une désynchronisation momentanée en fonction des variations des vitesses d'empilage et de dépilage.

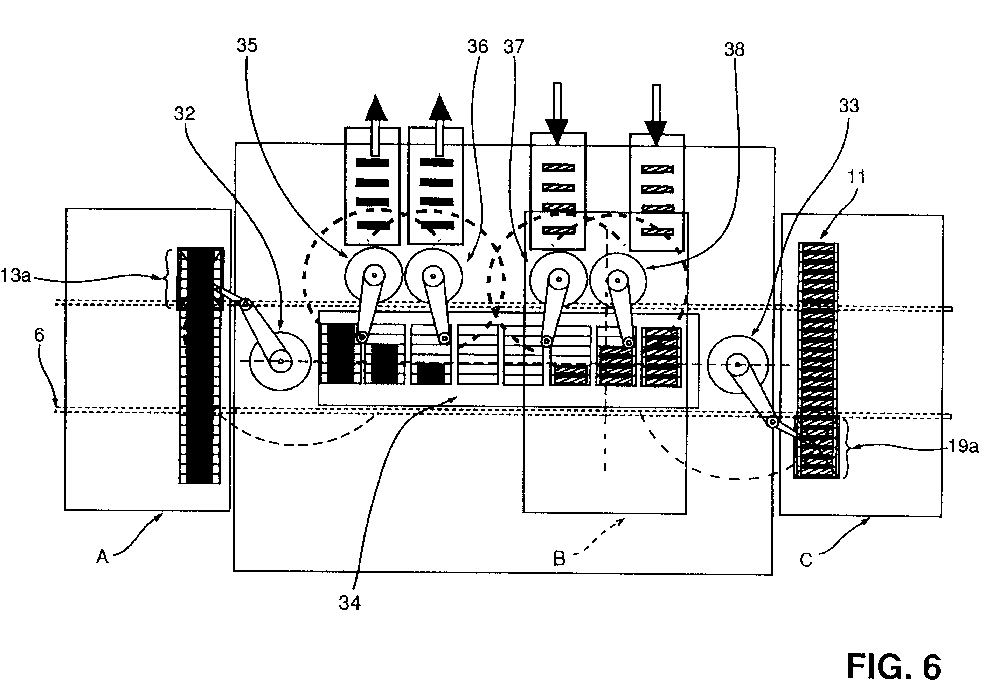

En référence aux figures 5 et 6, un deuxième mode de réalisation de l'invention comporte un moyen de dépilage 32, tel qu'un robot programmable à plusieurs axes et un moyen d'empilage 33 tel qu'un robot programmable à plusieurs axes, ainsi qu'un transporteur intermédiaire 34 apte à recevoir les supports réfractaires 12 chargés de produits cuits déposés sur le transporteur 34 par le robot de dépilage 32, de manière à permettre la préhension des produits cuits par des moyens de préhension 35 et 36 en laissant les supports réfractaires vidés en place sur le transporteur, charger les supports réfractaires 12 vidés en produits à cuire au moyen de deuxièmes moyens de préhension 37 et 38 et alimenter le robot d'empilage 33 en supports réfractaires 12 contenant les produits à cuire.

Les moyens de préhension 35 à 38 sont dans cet exemple des robots programmables de faible charge utile. Le robot de dépilage 32, le robot d'empilage 33 et le transporteur 34 sont situés à proximité immédiate de la voie ferrée 6, en position de chevauchement ou au-dessus de celle-ci. Cette disposition avantageuse selon l'invention permet le passage du wagon A après déchargement sous le dispositif selon l'invention par une position intermédiaire B jusqu'à une position de chargement correspondant au wagon C. Des moyens de sécurité et d'actionnement annexes peuvent être prévus pour que des rangées 11 disposées sur un wagon rempli de piles de supports réfractaires 12 ne viennent pas heurter le dispositif selon l'invention. Ces moyens annexes sont bien connus de l'homme du métier et peuvent être connectés directement à un automate programmable ou à un ordinateur de contrôle, et ne sont pas décrits plus avant ici.

L'invention décrite en référence à des modes de réalisation particuliers n'y est nullement limitée, mais couvre au contraire toute modification de forme et toute variante de réalisation dans le cadre et l'esprit de l'invention, étant entendu que le dispositif selon l'invention particulièrement compact au point de vue encombrement, flexible en ce qui concerne l'installation et le fonctionnement, et facilement commandable au moyen d'automates programmables ou d'ordinateurs équivalents, est situé à proximité immédiate des wagons A, B, C, de manière à réduire les dépenses d'énergie correspondant au déplacement des supports réfractaires 12 en comparaison des dispositifs de l'art antérieur. Suivant la taille des installations, les moyens de dépilage et d'empilage précédemment décrits pourront saisir des groupes de produits réfractaires pouvant aller jusqu'à une ligne complète.

## Revendications

1. Procédé de manutention pour le chargement de produits à cuire et le déchargement de produits cuits, dans lequel on place les produits à cuire dans des supports réfractaires (12) et on empile les supports réfractaires (12) en rangées ou piles (11) sur des wagons destinés à traverser un four de cuisson (1) et dans lequel, après cuisson, on dépile les rangées ou piles (11) pour évacuer les produits cuits, comportant les étapes suivantes :
a) dépiler les rangées (11) de supports réfractaires (12) contenant des produits cuits à l'aide d'un moyen de dépilage (14, 20, 32) saisissant les supports réfractaires (12) par sous-groupe (13a) d'une même ligne ou étage (13) ; chaque sous-groupe (13a) étant constitué de plusieurs supports réfractaires remplis de produits cuits ;
b) placer lesdits sous-groupes (13a) de supports réfractaires (12) avec leurs produits cuits sur un moyen (15, 22, 34) de transfert intermédiaire;
c) décharger uniquement les produits cuits à l'aide de premiers moyens (16; 24, 25; 35, 36) de préhension en laissant les supports réfractaires (12) en place sur ledit moyen de transfert intermédiaire (15, 22, 34);
d) recharger les supports réfractaires (12) vidés et placés sur ledit moyen (15, 22, 34) de transfert intermédiaire en produits à cuire à l'aide de deuxièmes moyens de préhension (17; 26, 27; 37, 38);
e) empiler les supports réfractaires (12) contenant les produits à cuire sur un wagon dépilé à une étape a) précédente, à l'aide d'un moyen d'empilage (18, 21, 33) saisissant les supports par sous-groupe (19a) d'une même ligne ou étage (19) ; chaque sous-groupe (19a) étant constitué de plusieurs supports réfractaires chargés de produits à cuire.

2. Procédé selon la revendication 1, caractérisé en ce que les moyens d'empilage (18, 21, 33) et de dépilage (14, 20, 32) travaillent à des cadences sensiblement identiques.

3. Procédé selon la revendication 1 ou 2, caractérisé en ce que le transfert intermédiaire d'un sous-groupe (13a) de supports réfractaires (12), s'effectue sensiblement selon une rotation (23) autour d'un axe sensiblement vertical

4. Procédé selon la revendication 1 ou 2, caractérisé en ce que le transfert intermédiaire d'un sous-groupe (13a) de supports réfractaires (12) s'effectue sensiblement selon une translation rectiligne.

5. Procédé selon l'une quelconque des revendications précédentes, caractérisé en ce que les moyens de dépilage (14, 20, 32) et d'empilage (18, 21, 33) sont commandés par un programme exécuté par un automate programmable, un ordinateur ou un moyen équivalent d'exécution de programmes.

6. Procédé selon l'une quelconque des revendications précédentes, caractérisé en ce que le transfert intermédiaire s'effectue par déplacements entre des postes prédéterminés de dépilage, de déchargement de produits cuits, de chargement en produits à cuire et d'empilage.

7. Dispositif de manutention pour le chargement de produits à cuire et le déchargement de produits cuits, comportant en combinaison : un moyen d'empilage (18, 21, 33), un moyen (15, 22, 34) transfert intermédiaire, un moyen de dépilage (14, 20, 32), un premier moyen (16; 24, 25; 35, 36) de préhension pour le déchargement de produits cuits et un deuxième moyen (17; 26, 27; 37, 38) de préhension pour le chargement de produits à cuire, caractérisé en ce que le moyen d'empilage (18, 21, 33) saisit les supports par sous-groupe (19a) d'une même ligne ou étage (19) et en ce que le moyen de dépilage (14, 20, 32) saisit les supports par sous-groupe (13a) d'une même ligne ou étage (13).

8. Dispositif selon la revendication 7, caractérisé en ce que les moyens de dépilage (14, 20, 32) et d'empilage (18, 21, 33) sont constitués par un appareil unique, de préférence un robot à commande programmable.

9. Dispositif selon la revendication 7 ou 8, caractérisé en ce que le moyen de transfert intermédiaire (15, 22) comporte un carrousel entraîné en rotation (23) autour d'un axe.

10. Dispositif selon la revendication 9, caractérisé en ce que l'axe d'entraînement en rotation (23) du carrousel est sensiblement vertical.

11. Dispositif selon la revendication 7 ou 8, caractérisé en ce que le moyen de transfert intermédiaire (34) comporte un transporteur.

12. Dispositif selon l'une quelconque des revendications 7, 9, 10 ou 11, caractérisé en ce que le moyen d'empilage (18, 21, 33) est constitué par un robot programmable à plusieurs axes et en ce que le moyen de dépilage (14, 20, 32) est également constitué par un robot programmable à plusieurs axes.

13. Dispositif selon l'une quelconque des revendications 7 à 12, caractérisé en ce qu'au moins un dit moyen de préhension (16, 17; 24-27; 35-38) est constitué par un robot programmable de faible charge utile.
